# DEMANDE DE BREVET EUROPEEN

(11) **EP 1 839 933 A1**
(43) Date de publication de la demande: **03.10.2007**
(21) Numéro de dépôt: 07300852.6
(22) Date de dépôt: 07.03.2007
(51) Int. Cl.: B60N 2/02, B60N 2/18, B60N 2/20, B60N 2/22, B60N 2/30, B60N 2/44

(54) **Siège arrière réglable de véhicule automobile**

(30) Priorité: 31.03.2006 FR 0651146
(71) Demandeur: PEUGEOT CITROËN AUTOMOBILES S.A., 78140 Velizy Villacoublay (FR)
(72) Inventeur: Bauvineau, Laurent, 92160, Antony (FR); Elkadi, Zubair, 77700, Bailly Romainvilliers (FR)
(74) Mandataire: Vigand, Régis Louis Michel

(57) **Abrégé**

- Il comprend une assise (2) et un dossier (1) qui peut pivoter par rapport à l'assise autour d'un axe de pivotement (A) du siège. Le dossier comporte une armature de fond (6), rigide, verrouillée sur la caisse du véhicule, et une armature de haut de dossier (9), montée à pivotement réglable sur ladite armature de fond (6). L'assise (2) comporte une armature de fond (13), verrouillée sur la caisse du véhicule, et un baquet (15), monté à pivotement réglable sur ladite armature de fond (13), de manière à régler la position dite de « nez de coussin » d'assise.
- Véhicules automobiles. Sièges de véhicule automobile. Confort et sécurité des sièges de véhicule automobile.

## Description

La présente invention concerne un siège arrière réglable de véhicule automobile.

Les automobilistes attendent des sièges de leur voiture un grand confort, un niveau de sécurité élevé et des facilités de réglage.

Et cette demande de confort et de sécurité concerne également les sièges arrière individuels, en particulier mais non exclusivement les sièges arrière de rang supérieur à deux. Il est demandé à ces sièges de nombreux réglages de confort, des facilités de manoeuvre, un rabattage possible, l'amovibilité et une bonne tenue aux chocs.

Selon une demande de brevet français n° 2 772 687, on connaît un siège de véhicule automobile avec un réglage de la position de la surface avant de l'appui-tête. Il est prévu un coussin pneumatique, incorporé dans l'appui-tête, qui est gonflé et fait avancer automatiquement la surface avant pour la rapprocher de l'occiput et de la nuque de l'occupant du siège lorsque ce dernier est de grande taille et qu'il recule la partie assise et incline le dossier vers l'arrière. Des capteurs signalent ces paramètres de réglage à une unité de commande, qui à son tour commande le gonflage de l'appui-tête. La manoeuvre intervient lorsque le siège est réglé par un occupant de petite taille.

On connaît également, selon la demande de brevet européen n° EP 1 346 872 A1, un siège de véhicule qui comprend une surface d'assise, et un dossier ayant un dispositif de réglage de position angulaire pour régler l'appui-tête dans une position donnée souhaitée. Ce dispositif est disposé à l'intérieur du dossier et fait basculer le support de coussin d'appui-tête autour d'un axe de pivotement disposé dans le dossier et s'étendant perpendiculairement à la surface d'assise. Il est prévu un dispositif de réglage de la hauteur, disposé à l'intérieur du dossier, qui a un moteur d'entraînement électrique ou pneumatique pour régler la hauteur de l'appui-tête. Le dispositif de réglage angulaire porte le dispositif de réglage de la hauteur.

Ces différents sièges, s'ils présentent un réglage de la position d'appui-tête, restent néanmoins peu confortables en cas de choc.

Pour cette raison, on a cherché à ancrer le dossier du siège à la caisse du véhicule.

Ainsi, selon une demande de brevet français n° 2 776 587, on connaît un siège de véhicule dont le dossier est doté d'une barre de verrouillage pivotante qui s'étend transversalement entre les deux bords latéraux du dossier et qui comporte deux tronçons d'extrémité coudés en forme de manivelle, adaptés pour ancrer le dossier à la caisse du véhicule en coopérant respectivement avec deux crochets d'ancrage solidaires de la caisse du véhicule. Chaque tronçon d'extrémité de la barre de verrouillage est associé à une patte de renfort présentant deux échancrures sensiblement verticales dans lesquelles est engagé ce tronçon d'extrémité lorsque la barre de verrouillage est dans sa position verrouillée.

Toutefois, ce siège avec dossier ancré sur la caisse du véhicule ne présente pas de réglages de confort, en particulier de la position du dossier, de l'appui-tête ou d'autres parties.

Le but de la présente invention est, par conséquent, de concevoir un siège arrière de véhicule automobile, qui permette un réglage confort et reste, en position d'utilisation, verrouillé sur la caisse du véhicule pour une meilleure tenue aux chocs.

C'est également un but de la présente invention de concevoir un siège qui permette d'avoir une bonne distance entre la tête et l'appui-tête dans toutes les positions de réglage.

C'est encore un but de la présente invention de réaliser un siège arrière réglable avec un mécanisme dont la conception est bien adaptée à une commande de réglage par des moteurs électriques, des poches gonflables à commande pneumatique ou des mécanismes à crantage.

Un autre but également de la présente invention est de réaliser un siège arrière qui, de plus, permette un appui sous cuisse optimal de l'utilisateur dans toutes les positions confort du dossier.

Enfin, c'est aussi un but de la présente invention de réaliser un tel siège avec une construction simple, de manière relativement économique, et qui conduise à un fonctionnement sûr et fiable.

Pour atteindre ces buts, la présente invention réalise un nouveau siège réglable de véhicule automobile, qui comprend une assise et un dossier qui peut pivoter par rapport à l'assise autour d'un axe de pivotement du siège, dans lequel le dossier comporte une armature de fond, rigide, verrouillée sur la caisse du véhicule, et une armature de haut de dossier, montée à pivotement réglable sur ladite armature de fond.

Selon un mode préféré de réalisation de l'invention, l'armature de haut de dossier est constituée d'une tubulure, sur laquelle sont montées solidaires les douilles d'appui-tête.

De préférence, l'armature de haut de dossier est montée à pivotement réglable par rapport à l'armature de fond au moyen d'un système à vérin électrique.

Selon une variante de réalisation de l'invention, l'armature de haut de dossier est montée à pivotement réglable par rapport à l'armature de fond au moyen d'au moins une poche gonflable disposée entre l'armature de fond et l'armature de haut de dossier.

De préférence, la (ou les) poche(s) gonflable(s) est (sont) gonflée(s) par un dispositif pneumatique.

De préférence, ladite armature de fond), rigide, verrouillée sur la caisse du véhicule, est constituée par une tôle.

De manière préférentielle, ladite armature de fond est verrouillée sur la caisse du véhicule au moyen d'un verrou, monté fixe sur l'armature de fond.

De manière préférentielle également, des flasques latéraux et des renforts pour la tenue aux chocs sont montés fixes sur ladite armature de fond.

De préférence, le haut de la nappe de dossier vient s'accrocher sur ladite tubulure constitutive de l'armature de haut de dossier, et le bas de la nappe de dossier vient s'accrocher sur lesdits flasques solidaires de l'armature de fond.

De plus, selon la présente invention, l'assise comporte une armature fixe de coussin, rigide, verrouillée sur le plancher du véhicule, et une armature dite de « nez de coussin », montée à pivotement réglable sur ladite armature fixe de coussin.

Cette armature fixe de coussin est constituée, de préférence, par une paire de brancards solidaires de la caisse du véhicule.

Et de préférence également, l'armature de nez de coussin est constituée par un baquet articulé par rapport à l'armature fixe de coussin.

Le baquet est articulé sur la paire de brancards autour d'un axe de pivotement parallèle à l'axe de pivotement du siège, de manière à régler l'inclinaison du nez de coussin du siège.

De manière préférentielle, des flasques sont montés fixes sur lesdits brancards, afin de supporter l'axe d'articulation de l'armature de nez de coussin par rapport à l'armature fixe de coussin.

Selon un mode de réalisation de l'invention, l'armature de nez de coussin est montée à pivotement par rapport à l'armature fixe de coussin au moyen d'un système à vérin électrique.

En variante, l'armature de nez de coussin est montée à pivotement par rapport à l'armature fixe de coussin au moyen d'au moins une poche gonflable disposée entre l'armature de nez de coussin et l'armature fixe de coussin.

La (ou les) poche(s) gonflable(s) est (sont) gonflée(s) par un dispositif pneumatique, par exemple.

De plus, l'armature fixe de coussin présente une traverse, solidaire desdits brancards, une traverse de baquet, solidaire dudit baquet, et des bielles d'articulation relient les deux traverses.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente un siège arrière de véhicule à haut de dossier réglable selon l'invention, en position nominale du dossier,
- la figure 2 représente le siège de la figure 1 avec son haut de dossier en position inclinée vers l'avant, au moyen du système de réglage de la présente invention,
- la figure 3 représente le siège de la figure 1 en position rabattue,
- la figure 4 est une vue du mécanisme de réglage du haut de dossier de siège selon la présente invention,
- la figure 5 est une vue du mécanisme de réglage du nez de coussin d'assise de siège selon la présente invention,
- la figure 6 est une vue schématique en coupe du siège selon la présente invention, avec des dispositifs de réglage à poches gonflables, le haut de dossier et le nez de coussin d'assise du siège étant en position nominale,
- la figure 7 est une vue schématique en coupe du siège de la figure 6, le haut de dossier et le nez de coussin d'assise du siège étant inclinés après action des dispositifs de réglage à poches gonflables.

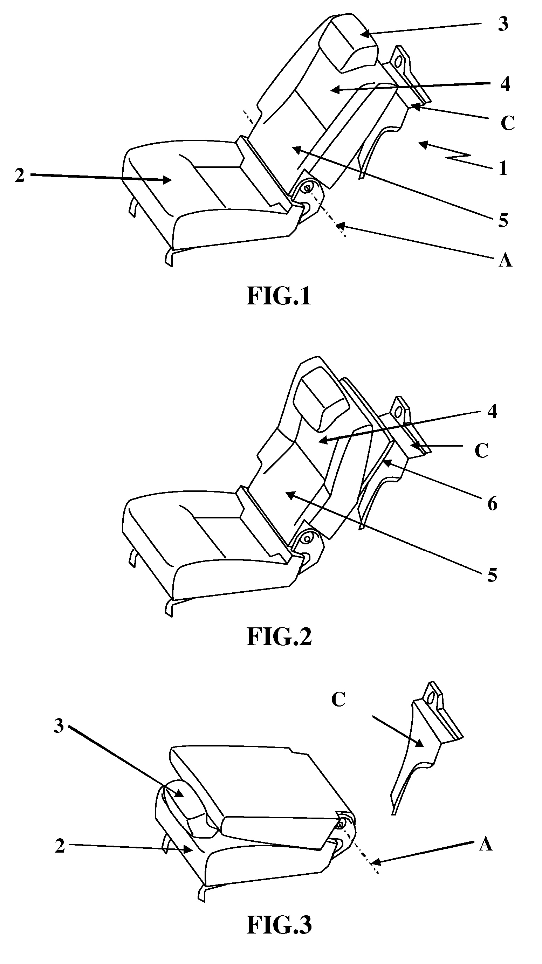

Sur le dessin des figures 1 à 3, on a représenté un siège arrière de véhicule automobile, qui comprend un dossier 1 et une assise 2. Le dossier 1 est équipé d'un appui-tête 3, de manière classique. Le dossier peut pivoter autour d'un axe A (figure 1 et 3) pour être rabattu et former une tablette ou une extension de plancher dans la position illustrée par la figure 3. Le dossier du siège présente une partie 4, dite « haut de dossier », qui est inclinable par rapport à une partie fixe ou armature de fond 6 (voir figure 2) selon un mode de fonctionnement et au moyen de mécanismes d'inclinaison qui seront décrits dans la suite de la présente description. La partie 5 ou « bas de dossier » reste fixe dans le plan de l'armature de fond 6, lorsque le siège est en position d'utilisation, c'est-à-dire lorsque le siège n'est pas rabattu. En position d'utilisation en tant que siège, ce dernier est fixé à la caisse (représentée partiellement et schématiquement en C sur les figures 1 à 3) du véhicule. Dans cette position d'utilisation siège, l'armature de fond 6 reste verrouillée sur la caisse C.

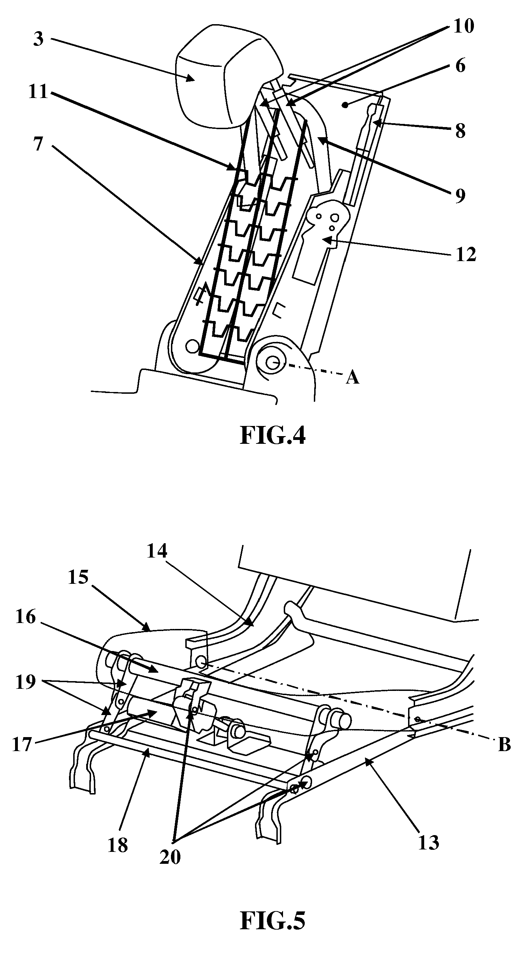

En se référant au dessin de la figure 4, l'armature de fond 6 du dossier 1 de siège est constituée par une tôle. Deux flasques latéraux 7 sont solidaires de cette tôle de fond 6. L'ensemble comprenant la tôle de fond 6 et les flasques 7, ainsi que d'éventuels renforts anti-chocs, est fixé sur la caisse (non représentée en figure 4) au moyen d'un verrou 8, monté sur ledit ensemble. L'armature du dossier comprend également, outre l'armature de fond 6, une armature de haut de dossier constituée par une tubulure ou tube 9 qui comprend les douilles d'appui-tête 10 et sur lequel vient s'accrocher le haut de la nappe de suspension 11, le bas de la nappe étant accroché sur les flasques 7. Le tube 9 de haut de dossier est entraîné en pivotement par le moteur à vérin 12 fixé sur un des flasques 7.

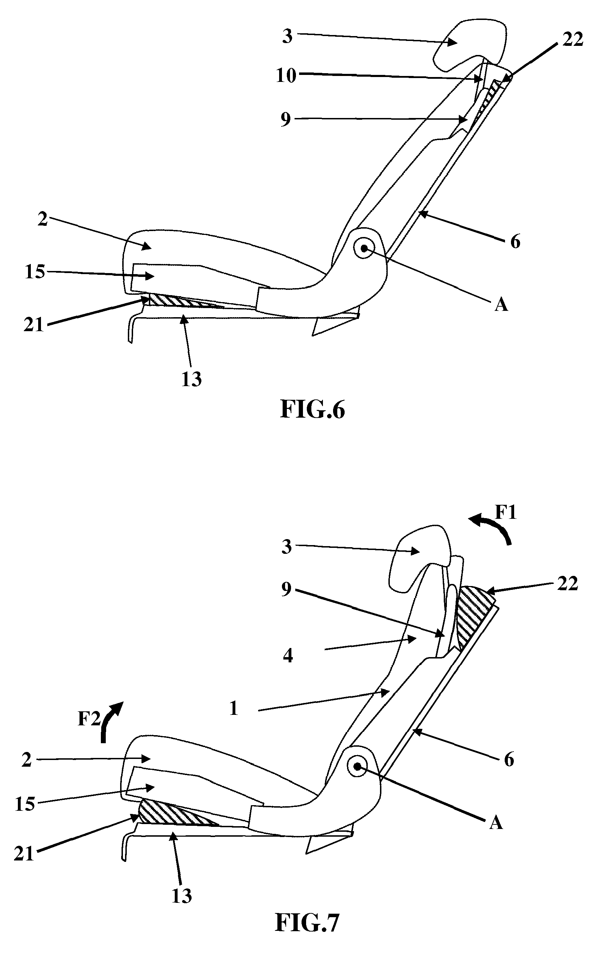

En référence au dessin de la figure 5, on va décrire maintenant le mécanisme de réglage de la partie avant de l'assise 2 du siège, dite « nez de coussin ». L'armature d'assise ou de coussin, comporte une partie fixe et une partie mobile. La partie fixe ou armature fixe d'assise est composée de deux brancards 13, et de deux flasques 14, latéraux, solidaires de l'un et l'autre brancard. Cette armature fixe d'assise est montée fixe sur le plancher du véhicule (non représenté).

La partie mobile ou armature de nez de coussin est constituée d'un baquet 15, de préférence en tôle, articulé sur les deux flasques 14 autour d'un axe d'articulation B supporté par les flasques. Il est prévu un moteur à vérin 17 afin d'écarter ou de rapprocher une traverse de baquet 16, solidaire du baquet 15, d'une traverse de brancards 18, fixe, solidaire des brancards fixes 13. L'action du moteur 17 fait, par conséquent, pivoter dans un sens ou dans l'autre le baquet 15 autour de l'axe d'articulation B. Les bielles d'articulation 19 qui relient de part et d'autre les traverses de brancards 18 et de baquet 16 décrivent des angles plus ou moins ouverts par rotation autour des liaisons pivots 20.

L'action du moteur 17 a donc pour effet de changer la position de l'avant de l'assise du siège, de constituer ainsi un réglage du nez de coussin, lequel réglage permet une meilleure position sous cuisse de l'occupant du siège.

Une variante de réalisation de l'invention est représentée sur le dessin des figures 6 et 7. Selon cette variante, le réglage en inclinaison par motoréducteur du haut de dossier est remplacé par l'action d'une ou plusieurs poches gonflables 22, et le réglage en inclinaison du nez de coussin de siège est remplacé également par l'action d'une ou plusieurs poches gonflables 21.

Le gonflement des poches gonflables 22 entre l'armature de fond fixe 6 et le tube 9 provoque le pivotement vers l'avant (flèche F1 sur la figure 7) du tube 9, lequel entraîne dans son mouvement le haut de dossier 4 et l'appui-tête 3.

Le gonflement des poches gonflables 21 entre la traverse des brancards 13 et le baquet 15 provoque le pivotement vers le haut (flèche F2 sur la figure 7) du baquet 15, lequel entraîne dans son mouvement l'avant de l'assise ou nez de coussin du siège 2.

De manière connue en soi, le gonflement et le dégonflement des poches de gonflage 21, 22 peut être commandé, par exemple, par un système de commande pneumatique comprenant une pompe à air et des valves pour la distribution de l'air. D'autres systèmes de commande fluidiques, électriques ou mécaniques peuvent être envisagés.

Le principe de la présente invention, dans ses variantes différentes de réalisation, permet d'obtenir un réglage confort, tout en gardant le dossier verrouillé sur la caisse du véhicule. Un tel principe garantit donc une meilleure tenue en cas de choc et permet d'éviter un sur dimensionnement des armatures, par conséquent permet un gain de masse.

Comme mentionné précédemment, la partie supérieure de la nappe du dossier 11 est accrochée sur le tube 9, c'est-à-dire sur la partie mobile ou haut de dossier 4, ce qui présente l'avantage d'éviter une formation d'amorces de cassure dans le dossier.

On a vu également que l'appui-tête était fixé sur la partie mobile, ce qui a pour résultat d'offrir une bonne distance entre la tête de l'occupant et l'appui-tête dans toutes les positions.

Le principe de la présente invention assure une réelle compatibilité entre la transformation de plancher plat obtenue avec le rabattement total du dossier de siège et la possibilité de réglage confort du siège en position d'utilisation.

Selon l'objet de la présente invention, il n'y a aucun jeu entre la tablette arrière et le dossier de siège arrière, ce qui offre l'avantage d'aucun bruit venant du coffre du véhicule.

De plus, le réglage du nez de coussin permet d'avoir un appui sous cuisse optimal dans toutes les positions confort du dossier.

Enfin, le principe de la présente invention est bien adapté à l'utilisation d'une commande comportant des moteurs électriques, ou des poches gonflables ou encore un mécanisme à crantage mécanique.

## Revendications

1. Siège arrière réglable de véhicule automobile, comprenant une assise (2) et un dossier (1) qui peut pivoter par rapport à l'assise (2) autour d'un axe de pivotement (A) du siège, **caractérisé en ce que** ledit dossier (1) comporte une armature de fond (6) de haut et de bas de dossier, rigide, verrouillée sur la caisse (C) du véhicule, et une armature de haut seulement de dossier (9), montée à pivotement réglable sur ladite armature de fond (6).

2. Siège arrière réglable de véhicule automobile selon la revendication 1, **caractérisé en ce que** ladite armature de haut de dossier (9) est constituée d'une tubulure, sur laquelle sont montées solidaires les douilles d'appui-tête (10).

3. Siège arrière réglable de véhicule automobile selon l'une quelconque des revendications 1 et 2, **caractérisé en ce que** l'armature de haut de dossier (9) est montée à pivotement réglable par rapport à l'armature de fond (6) au moyen d'un système à vérin électrique (12).

4. Siège arrière réglable de véhicule automobile selon l'une quelconque des revendications 1 et 2, **caractérisé en ce que** l'armature de haut de dossier (9) est montée à pivotement réglable par rapport à l'armature de fond (6) au moyen d'au moins une poche gonflable (22) disposée entre l'armature de fond (6) et l'armature de haut de dossier (9).

5. Siège arrière réglable de véhicule automobile selon la revendication 4, **caractérisé en ce que** la (ou les) poche(s) gonflable(s) (22) est (sont) gonflée(s) par un dispositif pneumatique.

6. Siège arrière réglable de véhicule automobile selon l'une quelconque des revendications 1 à 5, **caractérisé en ce que** ladite armature de fond (6), rigide, verrouillée sur la caisse (C) du véhicule, est constituée par une tôle.

7. Siège arrière réglable de véhicule automobile selon l'une quelconque des revendications 1 à 6, **caractérisé en ce que** ladite armature de fond (6) est verrouillée sur la caisse (C) du véhicule au moyen d'un verrou (8), monté fixe sur l'armature de fond (6).

8. Siège arrière réglable de véhicule automobile selon l'une quelconque des revendications 1 à 7, **caractérisé en ce que** des flasques latéraux (7) et des renforts pour la tenue aux chocs sont montés fixe sur ladite armature de fond (6).

9. Siège arrière réglable de véhicule automobile selon l'une quelconque des revendications 2 à 8, **caractérisé en ce que** le haut de la nappe de dossier (11) vient s'accrocher sur ladite tubulure (9).

10. Siège arrière réglable de véhicule automobile selon l'une quelconque des revendications 8 et 9, **caractérisé en ce que** le bas de la nappe de dossier (11) vient s'accrocher sur lesdits flasques (7).

11. Siège arrière réglable de véhicule automobile selon l'une quelconque des revendications 1 à 10, **caractérisé en ce que**, de plus, ladite assise (2) comporte une armature fixe de coussin (13), rigide, verrouillée sur le plancher du véhicule, et une armature de nez de coussin (15), montée à pivotement réglable sur ladite armature fixe de coussin (13).

12. Siège arrière réglable de véhicule automobile selon la revendication 11, **caractérisé en ce que** ladite armature fixe de coussin (13) est constituée par une paire de brancards (13) solidaires de la caisse du véhicule.

13. Siège arrière réglable de véhicule automobile selon la revendication 11, **caractérisé en ce que** ladite armature de nez de coussin (15) est constituée par un baquet articulé par rapport à l'armature fixe de coussin (13).

14. Siège arrière réglable de véhicule automobile selon la revendication 13, **caractérisé en ce que** ledit baquet (15) est articulé sur la paire de brancards (13) autour d'un axe de pivotement (B) parallèle à l'axe de pivotement (A) du siège, de manière à régler le nez de coussin du siège.

15. Siège arrière réglable de véhicule automobile selon l'une quelconque des revendications 12 à 14, **caractérisé en ce que** des flasques latéraux (14) sont montés fixes sur lesdits brancards (13), afin de supporter l'axe d'articulation (B) de l'armature de nez de coussin (15) .

16. Siège arrière réglable de véhicule automobile selon l'une quelconque des revendications 11 à 15, **caractérisé en ce que** ladite armature de nez de coussin (15) est montée à pivotement par rapport à l'armature fixe de coussin (13) au moyen d'un système à vérin électrique (17).

17. Siège arrière réglable de véhicule automobile selon l'une quelconque des revendications 11 à 15, **caractérisé en ce que** ladite armature de nez de coussin (15) est montée à pivotement par rapport à l'armature fixe de coussin (13) au moyen d'au moins une poche gonflable (21) disposée entre l'armature de nez de coussin (15) et l'armature fixe de coussin (13).

18. Siège arrière réglable de véhicule automobile selon la revendication 17, **caractérisé en ce que** la (ou les) poche(s) gonflable(s) (21) est (sont) gonflée(s) par un dispositif pneumatique.

19. Siège arrière réglable de véhicule automobile selon l'une quelconque des revendications 12 à 18, **caractérisé en ce que** l'armature fixe de coussin (13) présente une traverse (18), solidaire desdits brancards (13), une traverse (16) de baquet, solidaire dudit baquet (15), et **en ce que** des bielles d'articulation (19) relient les deux traverses (18, 16).
